# EUROPEAN PATENT APPLICATION

(11) **EP 4 757 121 A1**
(43) Date of publication of application: **10.06.2026**
(21) Application number: 24217513.1
(22) Date of filing: 04.12.2024
(51) Int. Cl.: H02K 1/00, H02P 27/00, H02P 6/32, H02K 11/042, H02K 16/04

(54) **A ROTOR ASSEMBLY ADAPTED TO FORM PART OF AN ARRANGEMENT FOR CONVERTING POWER**

(71) Applicant: Volvo Truck Corporation, 405 08 Göteborg (SE)
(72) Inventor: Lindberg, Johan, 415 24 Göteborg (SE); Larsson, Bo, 421 67 Västra Frölunda (SE)
(74) Representative: Valea AB

(57) **Abstract**

A rotor assembly (6) adapted to form part of an arrangement (4) for converting power, the rotor assembly comprising: a rotor shaft (10) extending along a central axis (C), and configured to be rotatable thereabout, a set of rotor windings (12, 12') comprising at least two rotor windings (12, 12'), each rotor winding in the set of rotor windings surrounding the central axis and being rotationally fixed to the rotor shaft, the rotor assembly (6) further comprising an electrical transfer arrangement (14) adapted to be electrically connected to a source of electrical power (15) and configured to selectively feed electric power to each rotor winding in the set of rotor windings.

## Description

### TECHNICAL FIELD

The disclosure relates generally to a rotor assembly. In particular aspects, the disclosure relates to a rotor assembly adapted to form part of an arrangement for converting power. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

It is often necessary to convert power from one form to another. For example, electrical power may be converted to mechanical power, and vice-versa. Such power conversion may be achieved by an electrical machine. Electrical machines may comprise a rotor arrangement having a rotor and a rotor winding and wherein a rotor flux, which may be generated when electrical power is supplied to the rotor winding, interacts with a stator flux, conversion of power may be achieved between electrical power and rotational movement of the rotor. In at least some cases it may be desirable for a flexible arrangement for converting power, wherein, for example, different conversion characteristics, suitable for different rotational speeds, may be utilised. In at least some cases such an arrangement may comprise a plurality of e.g. separate electrical machines and a mechanical transmission which may be used to switch between the plurality of electrical machines. However, a mechanical transmission may add weight and cost to the arrangement and may add losses to the resulting power conversion. Therefore, there is a need to develop improved technology relating to such arrangements for converting power, in particular there is a need to develop a more flexible rotor arrangement.

### SUMMARY

According to a first aspect of the disclosure, there is a rotor assembly adapted to form part of an arrangement for converting power, the rotor assembly comprising: a rotor shaft extending along a central axis, and configured to be rotatable thereabout, a set of rotor windings comprising at least two rotor windings, each rotor winding in the set of rotor windings surrounding the central axis and being rotationally fixed to the rotor shaft, the rotor assembly further comprising an electrical transfer arrangement adapted to be electrically connected to a source of electrical power and configured to selectively feed electric power to each rotor winding in the set of rotor windings.

The first aspect of the disclosure may seek to provide a rotor arrangement having a plurality of selectively powered windings. Technical benefit may include that a more flexible rotor arrangement, such that in at least some examples a plurality of different power conversion characteristics may be achieved. Furthermore, in at least some examples the plurality of selectively powered windings may provide alternatives in case of malfunction, overheating, or the like of one of the rotor windings.

Purely by way of example, the term that rotor winding is "surrounding the central axis" may encompass that rotor winding is partially or fully enclosing the central axis in a circumferential direction around the central axis.

Optionally in some examples, including in at least one preferred example, the electrical transfer arrangement is adapted to feed electric power to each rotor winding in the set of rotor windings in accordance with an electric power feeding distribution, indicative of the amount of electric power to be fed to each rotor winding in the set of rotor windings, selected from a set of different electric power feeding distributions comprising at least two electric power feeding distributions. Technical benefit may include that selective powering of the rotor windings may be achieved.

Optionally in some examples, including in at least one preferred example, the different winding configurations comprise different pole numbers and/or different winding layouts. Technical benefit may include that different power conversion characteristics may be achieved by the different rotor windings.

Optionally in some examples, including in at least one preferred example, the set of different electric power feeding distributions comprises at least one exclusive electric power feeding distribution for each rotor winding in the set of rotor windings, each exclusive electric power feeding distribution being indicative of feeding electric power to the associated rotor winding only. Technical benefit may include that rotor windings may be independently powered and/or controlled in a straightforward manner.

Optionally in some examples, including in at least one preferred example, the set of different electric power feeding distributions comprises at least one shared electric power feeding distribution being indicative of simultaneously feeding electric power to at least two of the rotor windings in the set of rotor windings. In at least some examples at least one shared electric power feeding distribution may be indicative of simultaneously feeding, for example, 50% of power to one rotor winding, and 50% to another rotor winding. Technical benefit may include that rotor flux may be generated for a plurality of rotor windings simultaneously, such that in at least some examples a plurality of rotors may be used simultaneously for power conversion.

Optionally in some examples, including in at least one preferred example, the set of different electric power feeding distributions comprises at least two shared electric power feeding distributions being indicative of simultaneously feeding electric power to the same at least two rotor windings in the set of rotor windings, wherein each of the at least two shared electric power feeding distributions is indicative of a different amount of electric power to be fed to each of the at least two rotor windings in the set of rotor windings. In at least some examples at least one of the two shared electric power feeding distribution may be indicative of simultaneously feeding, for example, 50% of power to one rotor winding, and 50% to another rotor winding, and another of the at least two shared power feeding distributions may be indicative of simultaneously feeding, for example, 75% of power to the same one rotor winding, and 25% to the same another rotor winding. Technical benefit may include that rotor flux generated by a set of simultaneously powered rotor windings may be varied.

Optionally in some examples, including in at least one preferred example, the electrical transfer arrangement is adapted to continuously vary feed of electric power to each rotor winding in the set of rotor windings. Technical benefit may include that generated rotor flux may be continuously varied for each rotor winding.

Optionally in some examples, including in at least one preferred example, the electrical transfer arrangement is adapted to continuously vary feed of electric power to each rotor winding in the set of rotor windings between at least two of the electric power feeding distributions. Technical benefit may include that rotor flux generated by a set of simultaneously powered rotor windings may be continuously varied.

Optionally in some examples, including in at least one preferred example, the electrical transfer arrangement is adapted to selectively feed electric power to each rotor in the set of rotor windings by controlling feed of current to each rotor in the set of rotor windings. Technical benefit may include that the selective feed of electric power may be achieved.

Optionally in some examples, including in at least one preferred example, the electrical transfer arrangement comprises a shared power electronic device adapted to selectively feed electric power to each rotor winding in the set of rotor windings, and wherein preferably the shared power electronic device is rotationally fixed to the rotor shaft. Technical benefit may include that a single power electronic device may be used to control electric power feed to each of the rotor windings.

Optionally in some examples, including in at least one preferred example, the electrical transfer arrangement comprises a plurality of rotor power electronic devices, each of the rotor power electronic devices being associated with one of the rotor windings in the set of rotor windings, and adapted to selectively control feeding of electric power to the corresponding rotor winding, and wherein preferably each rotor power electronic device is rotationally fixed to the rotor shaft. In at least some examples the rotor power electronic devices comprise buck converters. Technical benefit may include that electric power feed to each of the rotor windings may be controlled.

Optionally in some examples, including in at least one preferred example, the rotor shaft is adapted to rotate relative to the source of electrical power, and wherein the electrical transfer arrangement comprises a rotary electrical interface adapted to transfer electrical power from the source of electrical power to the set of rotor windings.

Optionally in some examples, including in at least one preferred example, the electrical transfer arrangement is adapted to selectively feed electric power to each rotor winding in the set of rotor windings in response to a modulation signal carried by the electric power. Technical benefit may include that control of the electrical transfer arrangement may be achieved via the supplied power.

Optionally in some examples, including in at least one preferred example, the rotor assembly comprises the rotary electrical interface, wherein the rotary electrical interface is adapted to generate the modulation signal carried by the electric power, and wherein the modulation signal is preferably generated by controlling a switching frequency at the rotary electrical interface. In at least some examples the rotary electrical interface comprises a DCDC converter, preferably a DCDC LLC converter. In at least some examples the rotary electrical interface is configured to switch between a plurality of predetermined switching frequencies, each of the predetermined switching frequencies being configured for one of the rotor windings. Technical benefit may include that control of the electrical transfer arrangement may be achieved by the rotary electrical interface.

Optionally in some examples, including in at least one preferred example, the rotor assembly comprises the plurality of rotor power electronic devices, wherein each of the rotor power electronic devices is adapted to selectively feed electric power to each corresponding rotor winding in the set of rotor windings in response to the modulation signal carried by the electric power. Technical benefit may include that electric power feed to each of the rotor windings may be controlled by the modulation signal carried by the electric power.

Optionally in some examples, including in at least one preferred example, the rotor assembly comprises the shared power electronic device, wherein the shared power electronic device is adapted to selectively feed electric power to each rotor winding in the set of rotor windings in response to the modulation signal carried by the electric power. Technical benefit may include that a single power electronic device may be used to control electric power feed to each of the rotor windings by the modulation signal.

Optionally in some examples, including in at least one preferred example, each rotor winding in the set of rotor windings has a rotor winding configuration, and wherein the rotor assembly is configured such that the rotor winding configuration of at least one of the rotor windings is different from the rotor winding configuration of at least one further rotor winding in the set of rotor windings, preferably each rotor winding configuration in the set of rotor windings is different from the rotor winding configuration of each other rotor winding in the set of rotor windings, and wherein the rotor winding configuration preferably comprises a pole number and/or a winding layout. Technical benefit may include that different power conversion characteristics may be achieved by the different rotor windings. In at least some examples the different rotor winding configurations may be adapted for different rotational speeds of the rotor. In at least some examples the rotor winding configuration of at least one of the rotor windings is the same as the rotor winding configuration of at least one further rotor winding in the set of rotor windings.

Optionally in some examples, including in at least one preferred example, the rotor assembly further comprising at least one sensor configured to measure a parameter indicative of a temperature of at least one of the rotor windings, and wherein the parameter is used for controlling the selective feeding of electric power to each rotor winding in the set of rotor windings. Technical benefit may include that in at least some examples the rotor arrangement may be controlled to mitigate against high temperatures.

Optionally in some examples, including in at least one preferred example, the rotor assembly further comprising at least one sensor configured to measure a parameter indicative of a noise level at the rotor shaft, and wherein the parameter is used for controlling the selective feeding of electric power to each rotor winding in the set of rotor windings. Technical benefit may include that the rotor arrangement may be controlled to mitigate against high noise levels.

Optionally in some examples, including in at least one preferred example, the electrical transfer arrangement is adapted to electrically connect together at least two of the rotor windings in the set of rotor windings such that the rotor assembly is configured for an asynchronous fallback mode of operation, preferably the electrical transfer arrangement comprises at least one switch adapted to electrically connect together the at least two rotor windings in the set of rotor windings such that the rotor assembly is configured for the asynchronous fallback mode of operation. Technical benefit may include that a continued power conversion may be possible, for example, after a cut-off in the supply of power.

According to a second aspect of the disclosure, there is provided an arrangement for converting power, comprising the rotor arrangement and a stator assembly, the stator assembly comprising at least one stator coaxially arranged with the rotor shaft and at least partially overlapping with at least one of the rotor windings along the central axis, and wherein the arrangement is adapted to convert power between the source of electrical power and a rotation of the rotor shaft relative to the at least one stator. The second aspect of the disclosure may seek to provide an arrangement for converting power having a rotor arrangement having a plurality of selectively powered windings. Technical benefit may include that a more flexible arrangement for converting power, such that in at least some examples a plurality of power conversion characteristics may be achieved.

Optionally in some examples, including in at least one preferred example, the at least one stator comprises a stator winding, and wherein the stator assembly comprises a stator electrical transfer arrangement adapted to be electrically connected to a source of electrical power and adapted to selectively feed electric power to the stator winding. Technical benefit may include that a plurality of power conversion characteristics may be achieved.

Optionally in some examples, including in at least one preferred example, the stator assembly comprises a plurality of stator windings, and wherein the stator electrical transfer arrangement is adapted to selectively feed electric power to each stator winding of the plurality of stator windings. Technical benefit may include that stator flux may be controlled, such that a plurality of power conversion characteristics may be achieved.

According to a third aspect of the disclosure, there is provided a vehicle comprising the rotor assembly. The third aspect of the disclosure may seek to provide a vehicle having an arrangement for converting power with a rotor arrangement having a plurality of selectively powered windings. Technical benefit may include that a vehicle having a more flexible arrangement for converting power, such that in at least some examples a plurality of power conversion characteristics may be achieved.

According to a fourth aspect of the disclosure, there is provided a method for controlling the arrangement, the arrangement further comprising a control unit, the method comprising: receiving a desired operating parameter for the rotor shaft at the control unit, determining, by the control unit, a desired electric power for each rotor winding in the set of rotor windings based on the desired operating parameter, controlling, by the control unit, the electrical transfer arrangement to selectively feed electric power to each rotor winding in the set of rotor windings based on the desired electric power. The third aspect of the disclosure may seek to provide a method of controlling an arrangement for converting power having a rotor arrangement having a plurality of selectively powered windings. Technical benefit may include that control of a more flexible arrangement for converting power, such that in at least some examples a plurality of power conversion characteristics may be achieved.

Optionally in some examples, including in at least one preferred example, controlling, by the control unit, the electrical transfer arrangement to selectively feed electric power to each rotor winding in the set of rotor windings comprises controlling, by the control unit, the rotary electrical interface to generate the modulation signal carried by the electric power, and wherein the electrical transfer arrangement is configured to selectively feed electric power to each rotor winding in the set of rotor windings in response to the the modulation signal carried by the electric power. Technical benefit may include that control of the electrical transfer arrangement may be achieved.

Optionally in some examples, including in at least one preferred example, selecting, by the control unit, the desired electric power for each rotor winding in the set of rotor windings is further based on a parameter indicative of the temperature of at least one of the rotor windings, and wherein preferably the control unit receives the parameter indicative of the temperature of at least one of the rotor windings from the sensor. Technical benefit may include that control of the electrical transfer arrangement may be achieved such that in at least some examples high temperatures may be mitigated.

Optionally in some examples, including in at least one preferred example, selecting, by the control unit, the desired electric power for each rotor winding in the set of rotor windings is further based on a parameter indicative of the noise level at the rotor shaft, and wherein preferably the control unit receives the parameter indicative of the noise level at the rotor shaft from the sensor. Technical benefit may include that control of the electrical transfer arrangement may be achieved such that in at least some examples high noise levels may be mitigated.

Optionally in some examples, including in at least one preferred example, the method further comprising monitoring, by the control unit, a parameter indicative of a torque output of the rotor shaft, determining, by the control unit, a torque ripple of the rotor shaft based on the parameter indicative of the torque output, wherein selecting, by the control unit, the desired electric power for each rotor winding in the set of rotor windings is further based on the torque ripple of the rotor shaft. Technical benefit may include that control of the electrical transfer arrangement may be achieved such that in at least some examples torque ripple may be mitigated.

Optionally in some examples, including in at least one preferred example, wherein the arrangement comprises the electrical transfer arrangement, the method further comprising: monitoring, by the control unit, a parameter indicative of a health of feed of electric power to the rotor assembly, controlling, by the control unit, the electrical transfer arrangement to connect at least two of the rotor windings in the set of rotor windings such that for the rotor assembly the asynchronous fallback mode of operation is achieved in response to the monitored parameter fulfilling a predetermined criterion. In at least some examples the parameter indicative of a health of feed of electric power may comprise a voltage, current, etc., of the supplied power. In at least some examples the predetermined criterion may comprise a deviation from an expected measurement or may be indicative of complete loss of power. In at least some examples, the parameter indicative of a health of feed of electric power may comprise a status of the electrical power source and/or the electrical circuits related thereto, such parameters may include temperature, presence of gasses, breaks in the circuit, etc. In at least some examples the predetermined criterion may be indicative of thermal runaway, or damage, due to a collision, or the like. Technical benefit may include that a continued power conversion may be possible after, for example a cut-off in the supply of power.

Optionally in some examples, including in at least one preferred example, the arrangement comprises the rotary electrical interface, and wherein controlling, by the control unit, the electrical transfer arrangement to connect at least two of the rotor windings in the set of rotor windings comprises controlling, by the control unit, the rotary electrical interface to generate the modulation signal carried by the electric power, and wherein the electrical transfer arrangement is configured to connect at least two of the rotor windings in the set of rotor windings in response to the the modulation signal carried by the electric power. In at least some examples the modulation signal may be generated/carried at low or zero load. Technical benefit may include that a continued power conversion may be possible after, for example a cut-off in the supply of power.

Optionally in some examples, including in at least one preferred example, the arrangement comprises the at least one stator winding and the stator electrical transfer arrangement, the method comprising: selecting, by the control unit, a desired electric power for the at least one stator winding based on the desired operating parameter for the rotor shaft, controlling, by the control unit, feed of electric power to the at least one stator winding based on the desired electric power for the at least one stator winding. Technical benefit may include that a plurality of power conversion characteristics may be achieved.

Optionally in some examples, including in at least one preferred example, selecting, by the control unit, the desired feed electric power for the at least one stator winding is further based on the desired electric power for at least one of the rotor windings in the set of rotor windings. Technical benefit may include that a plurality of power conversion characteristics may be achieved.

Optionally in some examples, including in at least one preferred example, the arrangement comprises the plurality of stator windings and the stator electrical transfer arrangement, the method further comprising: selecting, by the control unit, a desired electric power for each stator winding of the plurality of stator windings based on the desired operating parameter, controlling, by the control unit, feed of electric power to each stator winding of the plurality of stator windings based on the desired electric power for each stator winding of the plurality of stator windings. Technical benefit may include that a plurality of power conversion characteristics may be achieved.

Optionally in some examples, including in at least one preferred example, selecting, by the control unit, the desired electric power for each stator winding of the plurality of stator windings is further based on the desired electric power for at least one of the rotor windings in the set of rotor windings. Technical benefit may include that a plurality of power conversion characteristics may be achieved.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary arrangement for converting power according to an example.
**FIG. 3** is an exemplary electrical transfer arrangement according to an example.
**FIG. 4** is an exemplary electrical transfer arrangement according to an example.
**FIG. 5** is an exemplary arrangement for converting power according to an example.
**FIG. 6** is an exemplary rotor arrangement and stator arrangement according to an example.
**FIG. 7** is an exemplary flow chart illustrating a method according to an example.
**FIG. 8** is an exemplary flow chart illustrating a method according to an example.
**FIG. 9** is an exemplary flow chart illustrating a method according to an example.
**FIG. 10** is an exemplary flow chart illustrating a method according to an example.
**FIG. 11** is another view of **FIG. 2****,** according to an example.

### DETAILED DESCRIPTION

The detailed description set forth below provides information and examples of the disclosed technology with sufficient detail to enable those skilled in the art to practice the disclosure.

It is often necessary to convert power from one form to another. For example, electrical power may be converted to mechanical power, and vice-versa. Such power conversion may be achieved by an electrical machine. Electrical machines may comprise a rotor arrangement having a rotor and a rotor winding and wherein a rotor flux, which may be generated when electrical power is supplied to the rotor winding, interacts with a stator flux, conversion of power may be achieved between electrical power and rotational movement of the rotor. In at least some cases it may be desirable for a flexible arrangement for converting power, wherein, for example, different conversion characteristics, suitable for different rotational speeds, may be utilised. In at least some cases such an arrangement may comprise a plurality of electrical machines and a mechanical transmission which may be used to switch between the plurality of electrical machines. However, a mechanical transmission may add weight and cost to the arrangement and may add losses to the resulting power conversion. Therefore, there is a need to develop improved technology relating to such arrangements for converting power, in particular there is a need to develop a more flexible rotor arrangement

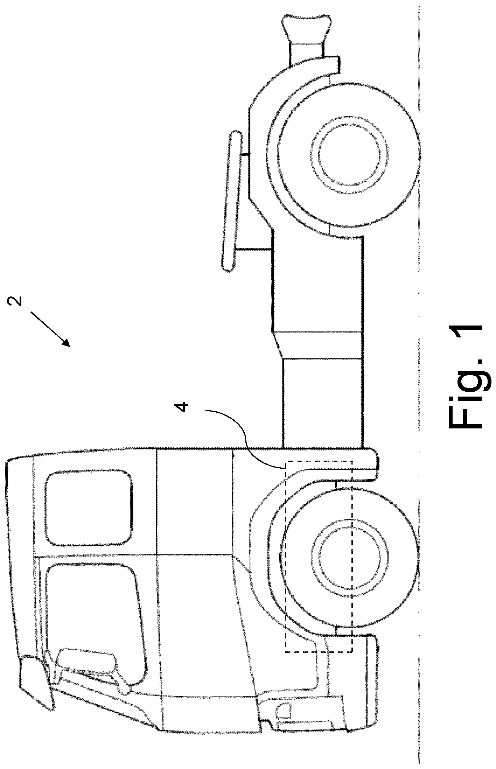

**FIG. 1** is an exemplary vehicle 2 according to an example, in the form of a truck 2. Whilst the shown aspect comprises a truck 2, the vehicle may comprise any type of vehicle such as a car, bus, industrial vehicle, marine vessel, aircraft, etc. In the shown example the vehicle 2 comprises an arrangement 4 for converting power.

Furthermore, the arrangement 4 for converting power may be used for non-vehicle applications, for example a stationary installation.

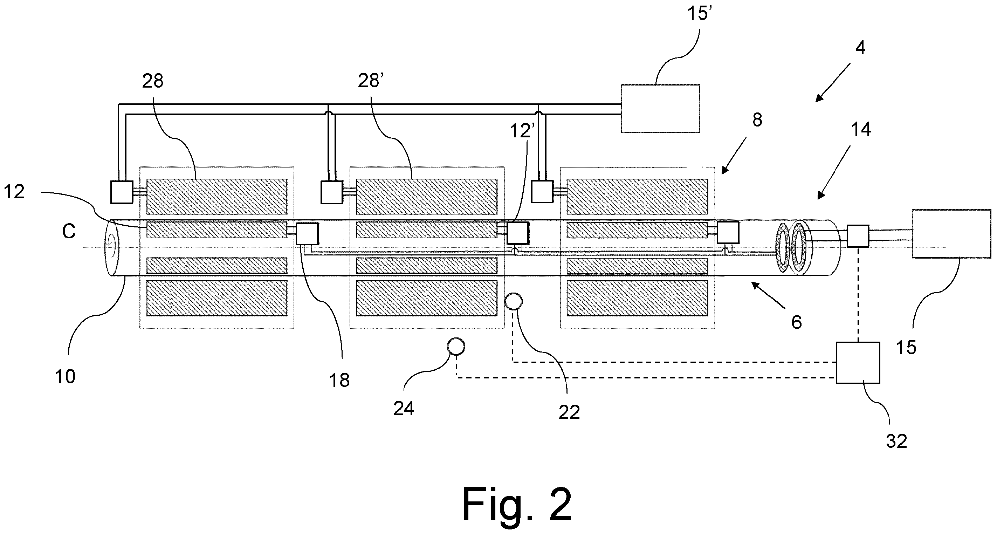

**FIG. 2** is an exemplary arrangement 4 for converting power according to an example. In at least some examples the arrangement 4 may be configured for converting power between at least one component adapted to rotate, such as a drive wheel and/or a power take-off, and a source of electrical power 15. In at least some examples a rotor of the arrangement 4 for converting power may be connected to at least one drive wheel, or the like via at least one transmission element, such as a gearing, differential, or the like.

The source of electrical power 15 may comprise an electrical battery, or a generator. In at least some examples the source of electrical power 15 may comprise a DC supply voltage. In at least some examples the source of electrical power 15 may be dedicated to supplying power to the rotor assembly 6, or the power arrangement 4. Alternatively, in at least some examples the source of electrical power 15 may supply power to auxiliary components, for example for powering auxiliary functions of the vehicle 2.

In the shown example the rotor assembly 6 is adapted to form part of the arrangement 4 for converting power. The rotor assembly 6 comprises a rotor shaft 10 extending along a central axis C, and configured to be rotatable thereabout. The rotor assembly 6 further comprises a set of rotor windings 12, 12' comprising at least two rotor windings 12, 12', each rotor winding 12, 12' in the set of rotor windings 12, 12' surrounding the central axis C and being rotationally fixed to the rotor shaft 10. In the shown example the set of rotor windings 12, 12' comprises three rotor windings 12, 12'. Alternatively, the set of rotor windings 12, 12' may comprise any number of rotor windings, for example two, four, or five rotor windings.

In the shown example the rotor assembly 6 further comprises an electrical transfer arrangement 14 adapted to be electrically connected to the source of electrical power 15 and configured to selectively feed electric power to each rotor winding 12, 12' in the set of rotor windings 12, 12'.

In at least some examples the electrical transfer arrangement 14 is adapted to feed electric power to each rotor winding 12, 12' in the set of rotor windings 12, 12' in accordance with an electric power feeding distribution. The electric power feeding distribution may be indicative of the amount of electric power to be fed to each rotor winding 12, 12' in the set of rotor windings 12, 12'. The electric power feeding distribution may be selected from a set of different electric power feeding distributions comprising at least two electric power feeding distributions.

In at least some examples the set of different electric power feeding distributions comprises at least one exclusive electric power feeding distribution for each rotor winding 12, 12' in the set of rotor windings 12, 12', each exclusive electric power feeding distribution being indicative of feeding electric power to the associated rotor winding 12, 12' only.

In at least some examples the set of different electric power feeding distributions comprises at least one shared electric power feeding distribution being indicative of simultaneously feeding electric power to at least two of the rotor windings 12, 12' in the set of rotor windings 12, 12'. In at least some examples at least one shared electric power feeding distribution may be indicative of simultaneously feeding, for example, 50% of power to one rotor winding, and 50% to another rotor winding. In at least some examples at least one shared electric power feeding distribution may be indicative of simultaneously feeding any number of rotor windings 12, 12', for example three rotor windings 12, 12'.

In at least some examples the set of different electric power feeding distributions comprises at least two shared electric power feeding distributions being indicative of simultaneously feeding electric power to the same at least two rotor windings 12, 12' in the set of rotor windings 12, 12', wherein each of the at least two shared electric power feeding distributions is indicative of a different amount of electric power to be fed to each of the at least two rotor windings 12, 12' in the set of rotor windings 12, 12'. In at least some examples at least one of the two shared electric power feeding distribution may be indicative of simultaneously feeding, for example, 50% of power to one rotor winding, and 50% to another rotor winding, and another of the at least two shared power feeding distributions may be indicative of simultaneously feeding, for example, 75% of power to the same one rotor winding, and 25% to the same another rotor winding.

In at least some examples the electrical transfer arrangement 14 is adapted to continuously vary feed of electric power to each rotor winding 12, 12' in the set of rotor windings 12, 12'.

In at least some examples the electrical transfer arrangement 14 is adapted to continuously vary feed of electric power to each rotor winding 12, 12' in the set of rotor windings 12, 12' between at least two of the electric power feeding distributions.

In at least some examples the electrical transfer arrangement 14 is adapted to selectively feed electric power to each rotor 12, 12' in the set of rotor windings 12, 12' by controlling feed of current to each rotor 12, 12' in the set of rotor windings 12, 12'.

In the example illustrated in Fig. 2, the electrical transfer arrangement 14 comprises a plurality of rotor power electronic devices 18, each of the rotor power electronic devices 18 being associated with one of the rotor windings 12, 12' in the set of rotor windings 12, 12', and adapted to selectively control feeding of electric power to the corresponding rotor winding 12, 12', and wherein preferably each rotor power electronic device 18 is rotationally fixed to the rotor shaft 10.

In at least some examples each rotor winding 12, 12' in the set of rotor windings 12, 12' has an extension along the central axis C, and wherein the rotor assembly 6 is configured such that at least one of the rotor windings 12 overlaps with at least one further rotor winding 12' along the central axis C.

In the shown example the arrangement 4 for converting power comprises a stator assembly 8, the stator assembly 8 comprising at least one stator 28, 28' coaxially arranged with the rotor shaft 10 and at least partially overlapping with at least one of the rotor windings 12, 12' along the central axis C. In the shown example the stator assembly 8 is arranged radially outer to the rotor assembly 6. Alternatively, in at least some examples the rotor assembly 6 may be arranged radially outer to the stator assembly 8.

In the shown example the arrangement 4 is adapted to convert power between the source of electrical power 15 and a rotation of the rotor shaft 10 relative to the at least one stator 28, 28'. In the shown example the stator assembly 8 comprises a plurality of stators 28, 28', wherein each stator 28, 28' corresponds to one of the rotor windings 12, 12'. Alternatively, in at least some examples the stator assembly 8 may comprise any number of stators 28, 28'.

In the shown example the at least one stator 28, 28' comprises a stator winding 28, 28', and wherein the stator assembly 8 comprises a stator electrical transfer arrangement 30 adapted to be electrically connected to a source of electrical power 15' and adapted to selectively feed electric power to the stator winding 28, 28'. The source of electrical power 15' may comprise an electrical battery, a generator, or the like. In at least some examples the source of electrical power 15' may comprise a DC supply voltage. In at least some examples the source of electrical power 15' may be dedicated to supplying power to the stator assembly 8. Alternatively, in at least some examples the source of electrical power 15' may additionally supply power to auxiliary components, for example for powering auxiliary functions of the vehicle 2.

In the shown example the stator assembly 8 comprises a plurality of stator windings 28, 28', and the stator electrical transfer arrangement 30 is adapted to selectively feed electric power to each stator winding 28, 28' of the plurality of stator windings 28, 28'. In the shown example the stator assembly 8 comprises three stator windings 28, 28'. Alternatively, in at least some examples the stator assembly 8 may comprise any number of stator windings 28, 28' .

In at least some examples the stator assembly 8 may comprise at least one stator 28, 28' comprising a permanent magnet.

In at least some examples the rotor assembly 6 comprising at least one sensor 22 configured to measure a parameter indicative of a temperature of at least one of the rotor windings 12, 12', and wherein the parameter is used for controlling the selective feeding of electric power to each rotor winding 12, 12' in the set of rotor windings 12, 12'. In at least some examples the plurality of sensors 22 is configured to measure a parameter indicative of the temperature of each of the rotor windings 12, 12'. In at least some examples the at least one sensor 22 is configured to measure the temperature of at least one of the rotor windings 12, 12'. In at least some examples the at least one sensor 22 comprises a temperature sensor. Alternatively, in at least some examples the at least one sensor 22 is configured to measure a current and/or a voltage of at least at one of the rotor windings 12, 12' and the temperature may be estimated therefrom, for example in conjunction with an atmospheric temperature and/or a time power has been converted and/or been applied to at least one of the rotor windings 12, 12'.

In at least some examples the rotor assembly comprises at least one sensor 24 configured to measure a parameter indicative of a noise level at the rotor shaft 10, and wherein the parameter is used for controlling the selective feeding of electric power to each rotor winding 12, 12' in the set of rotor windings 12, 12'. In at least some examples the at least one sensor 24 is configured to measure the noise level at the rotor shaft 10. In at least some examples the at least one sensor 24 comprises a microphone, piezoelectric transducer, ultrasonic sensor, or acoustic emission sensor.

In the shown example the arrangement 4 comprises a control unit 32. In at least some examples the control unit 32 is configured to control supply of power to the rotor windings 12, 12' and the stator windings 28, 28'. Furthermore, in at least some examples the control unit 32 is configured to receive information from one or more sensors, such as the at least one sensor 22 configured to measure a parameter indicative of a temperature, the at least one sensor 24 configured to measure a parameter indicative of a noise level, etc. Furthermore, in at least some examples the control unit 32 may receive input from a driver, for example a requested drive torque, speed, etc. The control unit 32 may be an ECU or a CPU, e.g., comprised in an ECU. Furthermore, the control unit 32 may comprise one or more such devices to individually or jointly execute a set (or multiple sets) of instructions. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

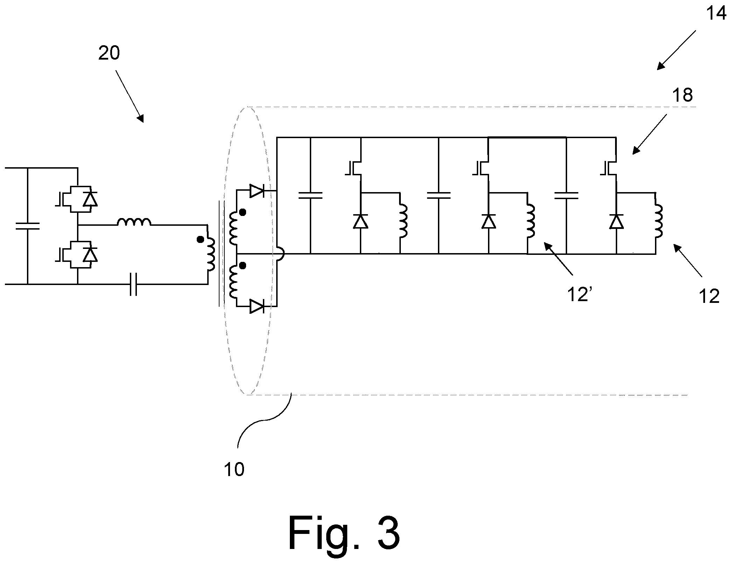

**FIG. 3** is an exemplary electrical transfer arrangement 14 according to an example. In the shown example the rotor shaft 10 is adapted to rotate relative to the source of electrical power 15. In the shown example the electrical transfer arrangement 14 comprises a rotary electrical interface 20 adapted to transfer electrical power from the source of electrical power 15 to the set of rotor windings 12, 12'. In the shown example the rotary electrical interface 20 comprises a transformer, wherein electrical power is transferred via inductance. In at least some examples the rotary electrical interface 20 may comprise a DCDC LLC converter. Alternatively, in at least some examples the rotary electrical interface 20 may comprise a slip-ring interface.

In at least some examples the electrical transfer arrangement 14 is adapted to selectively feed electric power to each rotor winding 12, 12' in the set of rotor windings 12, 12' in response to a modulation signal carried by the electric power.

In at least some examples the rotary electrical interface 20 is adapted to generate the modulation signal carried by the electric power. In at least some examples the modulation signal is generated by controlling a switching frequency at the rotary electrical interface 20. In at least some examples the rotary electrical interface is configured to switch between a plurality of predetermined switching frequencies, each of the predetermined switching frequencies being configured for one of the rotor windings. In at least some examples the modulation signal may be generated at low or zero load.

In at least some examples each of the rotor power electronic devices 18 is adapted to selectively feed electric power to each corresponding rotor winding 12, 12' in the set of rotor windings 12, 12' in response to the modulation signal carried by the electric power. In at least some examples the rotor power electronic devices 18 comprise buck converters.

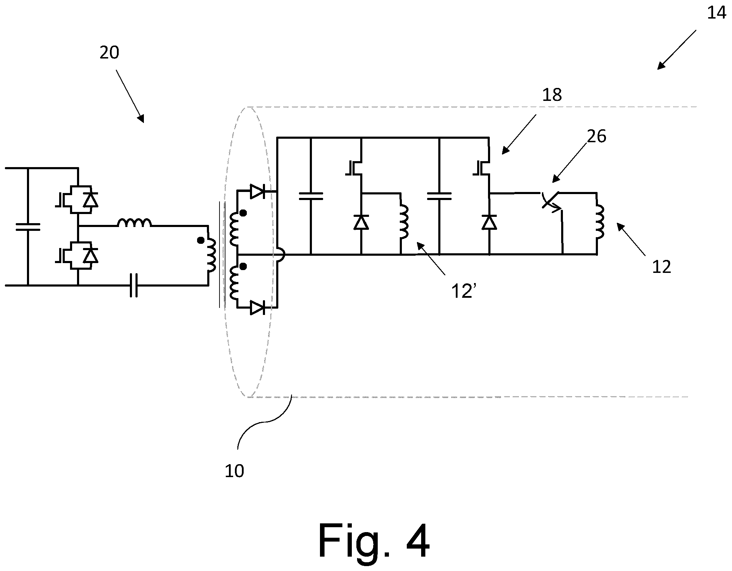

**FIG. 4** is an exemplary electrical transfer arrangement according to an example. The shown example differs from that of **FIG. 3** as the electrical transfer arrangement 14 is adapted to electrically connect together at least two of the rotor windings 12, 12' in the set of rotor windings 12, 12' such that the rotor assembly 6 is configured for an asynchronous fallback mode of operation. In the shown example the electrical transfer arrangement 14 comprises at least one switch 26 adapted to electrically connect together the at least two rotor windings 12, 12' in the set of rotor windings 12, 12' such that the rotor assembly 6 is configured for the asynchronous fallback mode of operation.

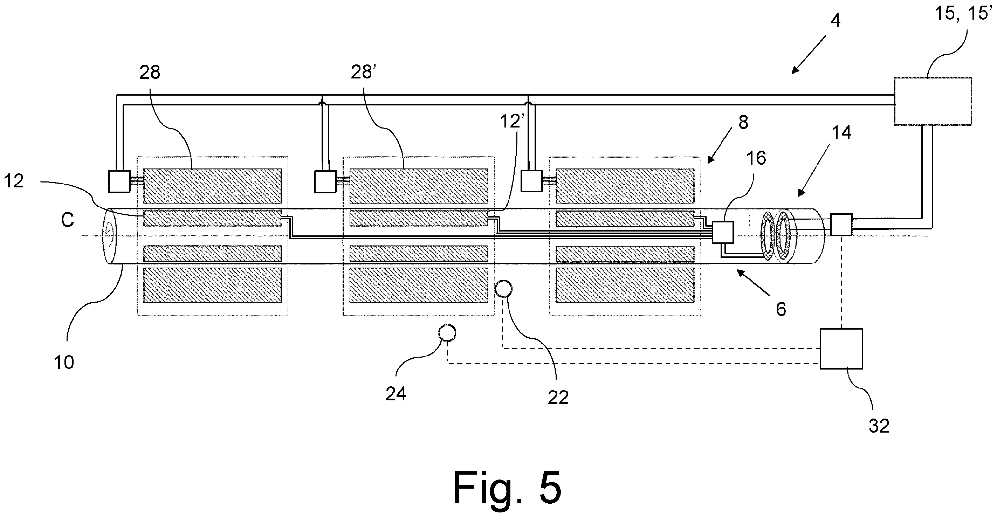

**FIG. 5** is an exemplary arrangement for converting power according to an example. The shown example differs from that of **FIG. 2** as the electrical transfer arrangement 14 comprises a shared power electronic device 16 adapted to selectively feed electric power to each rotor winding 12, 12' in the set of rotor windings 12, 12'. In at least some examples the shared power electronic device 16 is rotationally fixed to the rotor shaft 10.

In at least some examples the shared power electronic device 16 is adapted to selectively feed electric power to each rotor winding 12, 12' in the set of rotor windings 12, 12' in response to the modulation signal carried by the electric power.

In at least some examples the electrical transfer arrangement 14 may comprise both the shared power electronic device 16 and the plurality of rotor power electronic devices 18 as described with reference to **FIG. 2****.**

Furthermore, in the shown example the source of electrical power 15' configured to supply the stator windings 28, 28' is the same source as the source of electrical power 15 configured to supply the rotor windings 12, 12'.

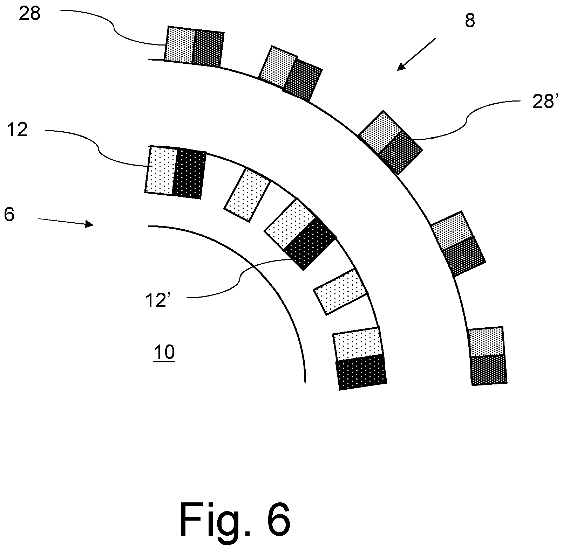

**FIG. 6** is an exemplary rotor arrangement 6 and stator arrangement 8 according to an example. In the shown example each rotor winding 12, 12' in the set of rotor windings 12, 12' has a rotor winding configuration, and wherein the rotor assembly 6 is configured such that the rotor winding configuration of at least one of the rotor windings 12 is different from the rotor winding configuration of at least one further rotor winding 12' in the set of rotor windings 12, 12'. In at least some examples each rotor winding configuration in the set of rotor windings 12, 12' is different from the rotor winding configuration of each other rotor winding 12, 12' in the set of rotor windings 12, 12'. In at least some examples the rotor winding configuration preferably comprises a pole number and/or a winding layout. In at least some examples one of rotor winding configurations in the set of rotor windings 12, 12' is the same as the rotor winding configuration of one of the other rotor windings 12, 12' in the set of rotor windings 12, 12'.

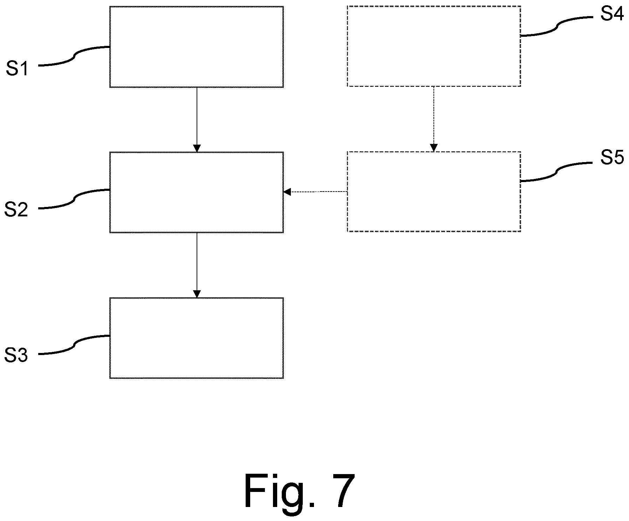

A method for controlling the arrangement 4 as described above is illustrated in **FIG. 7****.** The method comprises the following steps, which, unless otherwise indicated, may be taken in any suitable order:

**S1:** receiving a desired operating parameter for the rotor shaft 10 at the control unit 32.

**S2:** determining, by the control unit 32, a desired electric power for each rotor winding in the set of rotor windings based on the desired operating parameter.

**S3:** controlling, by the control unit 32, the electrical transfer arrangement 14 to selectively feed electric power to each rotor winding 12, 12' in the set of rotor windings 12, 12' based on the desired electric power.

In at least some examples the desired operating parameter may comprise a desired torque, rotational speed, or acceleration.

In at least some examples controlling S3, by the control unit 32 the electrical transfer arrangement 14 to selectively feed electric power to each rotor winding 12, 12' in the set of rotor windings 12, 12' may comprise controlling, by the control unit 32, the rotary electrical interface 20 to generate the modulation signal carried by the electric power, and wherein the electrical transfer arrangement 14 is configured to selectively feed electric power to each rotor winding 12, 12' in the set of rotor windings 12, 12' in response to the the modulation signal carried by the electric power.

In at least some examples selecting S2, by the control unit 32, the desired electric power for each rotor winding 12, 12' in the set of rotor windings 12, 12' may be further based on a parameter indicative of the temperature of at least one of the rotor windings 12, 12'. In at least some examples, wherein the arrangement 4 comprises the at least one sensor 22 as described with reference to **FIG. 2****,** the control unit 32 receives the parameter indicative of the temperature of at least one of the rotor windings 12, 12' from the sensor 22. In at least some examples selecting S2, by the control unit 32, the desired electric power for each rotor winding 12, 12' in the set of rotor windings 12, 12' may comprise reducing the desired electric power for one of the rotor windings 12, 12', when the parameter indicative of the temperature the rotor winding 12, 12', is above a threshold. In at least some examples selecting S2, by the control unit 32, the desired electric power for each rotor winding 12, 12' in the set of rotor windings 12, 12' may comprise the desired electric power being zero for one of the rotor windings 12, 12', when the parameter indicative of the temperature the rotor winding 12, 12', is above a threshold. In at least some examples one of the rotor windings 12, 12' may be prioritized electric power when the parameter indicative of the temperature of the rotor winding 12, 12' is less than that of the other of the rotor windings 12, 12'.

In at least some examples selecting S2, by the control unit 32, the desired electric power for each rotor winding 12, 12' in the set of rotor windings 12, 12' may be further based on a parameter indicative of the noise level at the rotor shaft 10. In at least some examples, wherein the arrangement 4 comprises the at least one sensor 24 as described with reference to **FIG. 2****,** the control unit 32 receives the parameter indicative of the noise level at the rotor shaft 10 from the sensor 24. In at least some examples selecting S2, by the control unit 32, the desired electric power for each rotor winding 12, 12' in the set of rotor windings 12, 12' may comprise reducing a desired electric power for one of the rotor windings 12, 12', when the parameter indicative of the noise level at the rotor shaft 10, is above a threshold during an operation of the shaft wherein the rotor winding 12, 12' is fed electric power.

In at least some examples the method may further comprise the following steps, which, unless otherwise indicated, may be taken in any suitable order:

**S4:** monitoring, by the control unit 32, a parameter indicative of a torque output of the rotor shaft 10.

**S5:** determining, by the control unit 32, a torque ripple of the rotor shaft 10 based on the parameter indicative of the torque output.

In at least some examples selecting S2, by the control unit 32, the desired electric power for each rotor winding 12, 12' in the set of rotor windings 12, 12' may be further based on the torque ripple of the rotor shaft 10.

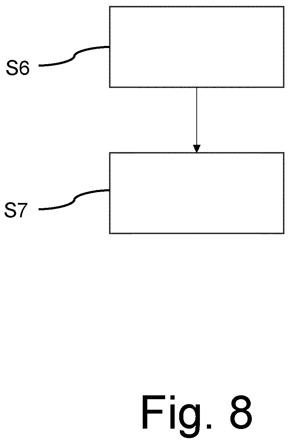

A method for further controlling the arrangement 4 as described above is illustrated in **FIG. 8****,** wherein the arrangement 4 comprises the electrical transfer arrangement 10. The method comprises the following steps, which, unless otherwise indicated, may be taken in any suitable order:

**S6:** monitoring, by the control unit 32, a parameter indicative of a health of feed of electric power to the rotor assembly 6.

**S7:** controlling, by the control unit 32, the electrical transfer arrangement 14 to connect at least two of the rotor windings 12, 12' in the set of rotor windings 12, 12' such that for the rotor assembly 6 the asynchronous fallback mode of operation is achieved in response to the monitored parameter fulfilling a predetermined criterion.

In at least some examples the parameter indicative of a health of feed of electric power may comprise a voltage, current, etc., of the supplied power. In at least some examples the predetermined criterion may comprise a deviation from an expected measurement or may be indicative of complete loss of power. In at least some examples, the parameter indicative of a health of feed of electric power may comprise a status of the electrical power source and/or the electrical circuits related thereto, such parameters may include temperature, presence of gasses, breaks in the circuit, etc. In at least some examples the predetermined criterion may be indicative of thermal runaway, or damage, due to a collision, or the like.

In at least some examples, wherein the arrangement 4 comprises the rotary electrical interface 20, controlling S7, by the control unit 32, the electrical transfer arrangement 14 to connect at least two of the rotor windings 12, 12' in the set of rotor windings 12, 12' may comprise controlling, by the control unit 32, the rotary electrical interface 20 to generate the modulation signal carried by the electric power. In at least some examples the electrical transfer arrangement 14 is configured to connect at least two of the rotor windings 12, 12' in the set of rotor windings 12, 12' in response to the modulation signal carried by the electric power.

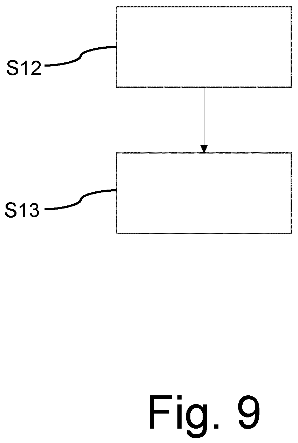

A method for further controlling the arrangement 4 as described above is illustrated in **FIG. 9****,** wherein the arrangement 4 comprises the at least one stator winding 28, 28' and the stator electrical transfer arrangement 30. The method comprises the following steps, which, unless otherwise indicated, may be taken in any suitable order:

**S12:** selecting, by the control unit 32, a desired electric power for the at least one stator winding 28, 28' based on the desired operating parameter for the rotor shaft 10.

**S13:** controlling, by the control unit 32, feed of electric power to the at least one stator winding 28, 28' based on the desired electric power for the at least one stator winding 28, 28'.

In at least some examples selecting S12, by the control unit 32, the desired feed electric power for the at least one stator winding 28, 28' is further based on the desired electric power for at least one of the rotor windings 12, 12' in the set of rotor windings 12, 12'.

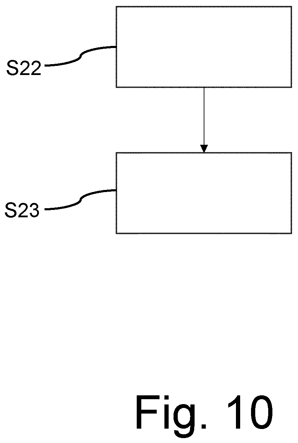

A method for further controlling the arrangement 4 as described above is illustrated in **FIG. 10****,** wherein the arrangement 4 comprises the plurality of stator windings 28, 28' and the stator electrical transfer arrangement 30. The method comprises the following steps, which, unless otherwise indicated, may be taken in any suitable order:

**S22:** selecting, by the control unit 32, a desired electric power for each stator winding 28, 28' of the plurality of stator windings 28, 28' based on the desired operating parameter.

**S23:** controlling, by the control unit 32, feed of electric power to each stator winding 28, 28' of the plurality of stator windings 28, 28' based on the desired electric power for each stator winding 28, 28' of the plurality of stator windings 28, 28' .

In at least some examples selecting S22, by the control unit 32, the desired electric power for each stator winding 28, 28' of the plurality of stator windings 28, 28' is further based on the desired electric power for at least one of the rotor windings 12, 12' in the set of rotor windings 12, 12'.

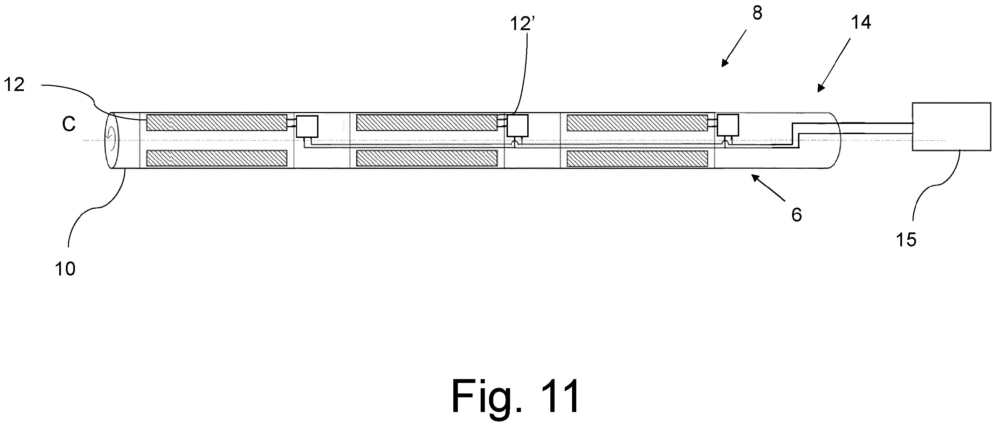

**FIG. 11** is another view of **FIG. 2****,** according to an example. A rotor assembly 6 adapted to form part of an arrangement 4 for converting power, the rotor assembly 6 comprising: a rotor shaft 10 extending along a central axis C, and configured to be rotatable thereabout, a set of rotor windings 12, 12' comprising at least two rotor windings 12, 12', each rotor winding 12, 12' in the set of rotor windings 12, 12' surrounding the central axis C and being rotationally fixed to the rotor shaft 10, the rotor assembly 6 further comprising an electrical transfer arrangement 14 adapted to be electrically connected to a source of electrical power 15 and configured to selectively feed electric power to each rotor winding 12, 12' in the set of rotor windings 12, 12'.

In the following, possible features and feature combinations of the present disclosure are presented as a list of examples.

**Example 1:** A rotor assembly 6 adapted to form part of an arrangement 4 for converting power, the rotor assembly 6 comprising: a rotor shaft 10 extending along a central axis C, and configured to be rotatable thereabout, a set of rotor windings 12, 12' comprising at least two rotor windings 12, 12', each rotor winding 12, 12' in the set of rotor windings 12, 12' surrounding the central axis C and being rotationally fixed to the rotor shaft 10, the rotor assembly 6 further comprising an electrical transfer arrangement 14 adapted to be electrically connected to a source of electrical power 15 and configured to selectively feed electric power to each rotor winding 12, 12' in the set of rotor windings 12, 12'.

**Example 2:** The rotor assembly 6 of example 1, wherein the electrical transfer arrangement 14 is adapted to feed electric power to each rotor winding 12, 12' in the set of rotor windings 12, 12' in accordance with an electric power feeding distribution, indicative of the amount of electric power to be fed to each rotor winding 12, 12' in the set of rotor windings 12, 12', selected from a set of different electric power feeding distributions comprising at least two electric power feeding distributions.

**Example 3:** The rotor assembly 6 of example 2, wherein the set of different electric power feeding distributions comprises at least one exclusive electric power feeding distribution for each rotor winding 12, 12' in the set of rotor windings 12, 12', each exclusive electric power feeding distribution being indicative of feeding electric power to the associated rotor winding 12, 12' only.

**Example 4:** The rotor assembly 6 of any of examples 2-3, wherein the set of different electric power feeding distributions comprises at least one shared electric power feeding distribution being indicative of simultaneously feeding electric power to at least two of the rotor windings 12, 12' in the set of rotor windings 12, 12'.

**Example 5:** The rotor assembly 6 of example 4, wherein the set of different electric power feeding distributions comprises at least two shared electric power feeding distributions being indicative of simultaneously feeding electric power to the same at least two rotor windings 12, 12' in the set of rotor windings 12, 12', wherein each of the at least two shared electric power feeding distributions is indicative of a different amount of electric power to be fed to each of the at least two rotor windings 12, 12' in the set of rotor windings 12, 12'.

**Example 6:** The rotor assembly 6 of any of the preceding examples, wherein the electrical transfer arrangement 14 is adapted to continuously vary feed of electric power to each rotor winding 12, 12' in the set of rotor windings 12, 12'.

**Example 7:** The rotor assembly 6 of example 6, when dependent on example 2, wherein the electrical transfer arrangement 14 is adapted to continuously vary feed of electric power to each rotor winding 12, 12' in the set of rotor windings 12, 12' between at least two of the electric power feeding distributions.

**Example 8:** The rotor assembly 6 of any of the preceding examples, wherein the electrical transfer arrangement 14 is adapted to selectively feed electric power to each rotor 12, 12' in the set of rotor windings 12, 12' by controlling feed of current to each rotor 12, 12' in the set of rotor windings 12, 12'.

**Example 9:** The rotor assembly 6 of any of the preceding examples, wherein the electrical transfer arrangement 14 comprises a shared power electronic device 16 adapted to selectively feed electric power to each rotor winding 12, 12' in the set of rotor windings 12, 12', and wherein preferably the shared power electronic device 16 is rotationally fixed to the rotor shaft 10.

**Example 10:** The rotor assembly 6 of any of the preceding examples, wherein the electrical transfer arrangement 14 comprises a plurality of rotor power electronic devices 18, each of the rotor power electronic devices 18 being associated with one of the rotor windings 12, 12' in the set of rotor windings 12, 12', and adapted to selectively control feeding of electric power to the corresponding rotor winding 12, 12', and wherein preferably each rotor power electronic device 18 is rotationally fixed to the rotor shaft 10.

**Example 11:** The rotor assembly 6 of any of the preceding examples, wherein the rotor shaft 10 is adapted to rotate relative to the source of electrical power 15, and wherein the electrical transfer arrangement 14 comprises a rotary electrical interface 20 adapted to transfer electrical power from the source of electrical power 15 to the set of rotor windings 12, 12'.

**Example 12:** The rotor assembly 6 of any of the preceding examples, wherein the electrical transfer arrangement 14 is adapted to selectively feed electric power to each rotor winding 12, 12' in the set of rotor windings 12, 12' in response to a modulation signal carried by the electric power.

**Example 13:** The rotor assembly 6 of example 12, when dependent on example 11, wherein the rotor assembly 6 comprises the rotary electrical interface 20, wherein the rotary electrical interface 20 is adapted to generate the modulation signal carried by the electric power, and wherein the modulation signal is preferably generated by controlling a switching frequency at the rotary electrical interface 20.

**Example 14:** The rotor assembly 6 of any of examples 12-13, when dependent on example 10, wherein the rotor assembly 6 comprises the plurality of rotor power electronic devices 18, wherein each of the rotor power electronic devices 18 is adapted to selectively feed electric power to each corresponding rotor winding 12, 12' in the set of rotor windings 12, 12' in response to the modulation signal carried by the electric power.

**Example 15:** The rotor assembly 6 of any of examples 12-14, when dependent on example 11, wherein the rotor assembly 6 comprises the shared power electronic device 16, wherein the shared power electronic device 16 is adapted to selectively feed electric power to each rotor winding 12, 12' in the set of rotor windings 12, 12' in response to the modulation signal carried by the electric power.

**Example 16:** The rotor assembly 6 of any one of the preceding examples, wherein each rotor winding 12, 12' in the set of rotor windings 12, 12' has a rotor winding configuration, and wherein the rotor assembly 6 is configured such that the rotor winding configuration of at least one of the rotor windings 12 is different from the rotor winding configuration of at least one further rotor winding 12' in the set of rotor windings 12, 12', preferably each rotor winding configuration in the set of rotor windings 12, 12' is different from the rotor winding configuration of each other rotor winding 12, 12' in the set of rotor windings 12, 12', and wherein the rotor winding configuration preferably comprises a pole number and/or a winding layout.

**Example 17:** The rotor assembly 6 of any one of the preceding examples, wherein each rotor winding 12, 12' in the set of rotor windings 12, 12' has an extension along the central axis C, and wherein the rotor assembly 6 is configured such that at least one of the rotor windings 12 overlaps with at least one further rotor winding 12' along the central axis C.

**Example 18:** The rotor assembly 6 of any one of the preceding examples, further comprising at least one sensor 22 configured to measure a parameter indicative of a temperature of at least one of the rotor windings 12, 12', and wherein the parameter is used for controlling the selective feeding of electric power to each rotor winding 12, 12' in the set of rotor windings 12, 12'.

**Example 19:** The rotor assembly 6 of any one of the preceding examples, further comprising at least one sensor 24 configured to measure a parameter indicative of a noise level at the rotor shaft 10, and wherein the parameter is used for controlling the selective feeding of electric power to each rotor winding 12, 12' in the set of rotor windings 12, 12'.

**Example 20:** The rotor assembly 6 of any one of the preceding examples, wherein the electrical transfer arrangement 14 is adapted to electrically connect together at least two of the rotor windings 12, 12' in the set of rotor windings 12, 12' such that the rotor assembly 6 is configured for an asynchronous fallback mode of operation, preferably the electrical transfer arrangement 14 comprises at least one switch 26 adapted to electrically connect together the at least two rotor windings 12, 12' in the set of rotor windings 12, 12' such that the rotor assembly 6 is configured for the asynchronous fallback mode of operation.

**Example 21:** An arrangement 4 for converting power, comprising the rotor arrangement 6 according to any of the preceding examples and a stator assembly 8, the stator assembly 8 comprising at least one stator 28, 28' coaxially arranged with the rotor shaft 10 and at least partially overlapping with at least one of the rotor windings 12, 12' along the central axis C, and wherein the arrangement 4 is adapted to convert power between the source of electrical power 15 and a rotation of the rotor shaft 10 relative to the at least one stator 28, 28'.

**Example 22:** The arrangement 4 of example 20, wherein the at least one stator 28, 28' comprises a stator winding 28, 28', and wherein the stator assembly 8 comprises a stator electrical transfer arrangement 30 adapted to be electrically connected to a source of electrical power 15' and adapted to selectively feed electric power to the stator winding 28, 28'.

**Example 23:** The arrangement 4 of example 22, wherein the stator assembly 8 comprises a plurality of stator windings 28, 28', and wherein the stator electrical transfer arrangement 30 is adapted to selectively feed electric power to each stator winding 28, 28' of the plurality of stator windings 28, 28'.

**Example 24:** A vehicle 2 comprising the rotor assembly 6 according to any one of examples 1-20 or the arrangement 4 according to any of examples 21-23.

**Example 25:** A method for controlling the arrangement 4 of any of examples 20-22, the arrangement 4 further comprising a control unit 32, the method comprising: receiving S1 a desired operating parameter for the rotor shaft 10 at the control unit 32, determining S2, by the control unit 32, a desired electric power for each rotor winding in the set of rotor windings based on the desired operating parameter, controlling S3, by the control unit 32, the electrical transfer arrangement 14 to selectively feed electric power to each rotor winding 12, 12' in the set of rotor windings 12, 12' based on the desired electric power.

**Example 26:** The method of example 25, wherein the arrangement 4 comprises the rotary electrical interface 20 of example 10, wherein controlling S3, by the control unit 32, the electrical transfer arrangement 14 to selectively feed electric power to each rotor winding 12, 12' in the set of rotor windings 12, 12' comprises controlling, by the control unit 32, the rotary electrical interface 20 to generate the modulation signal carried by the electric power, and wherein the electrical transfer arrangement 14 is configured to selectively feed electric power to each rotor winding 12, 12' in the set of rotor windings 12, 12' in response to the the modulation signal carried by the electric power.

**Example 27:** The method of any one of examples 25-26, wherein selecting S2, by the control unit 32, the desired electric power for each rotor winding 12, 12' in the set of rotor windings 12, 12' is further based on a parameter indicative of the temperature of at least one of the rotor windings 12, 12', and wherein preferably the arrangement 4 comprises the at least one sensor 22 of example 18, and wherein the control unit 32 receives the parameter indicative of the temperature of at least one of the rotor windings 12, 12' from the sensor 22.

**Example 28:** The method of any of examples 25-27, wherein selecting S2, by the control unit 32, the desired electric power for each rotor winding 12, 12' in the set of rotor windings 12, 12' is further based on a parameter indicative of the noise level at the rotor shaft 10, and wherein preferably the arrangement 4 comprises the at least one sensor 24 of example 19, and wherein the control unit 32 receives the parameter indicative of the noise level at the rotor shaft 10 from the sensor 24.

**Example 29:** The method of any of examples 25-28, the method further comprising: monitoring S4, by the control unit 32, a parameter indicative of a torque output of the rotor shaft 10, determining S5, by the control unit 32, a torque ripple of the rotor shaft 10 based on the parameter indicative of the torque output, wherein selecting S2, by the control unit 32, the desired electric power for each rotor winding 12, 12' in the set of rotor windings 12, 12' is further based on the torque ripple of the rotor shaft 10.

**Example 30:** The method of any of examples 25-29, when dependent on example 20, wherein the arrangement 4 comprises the electrical transfer arrangement 10, the method further comprising: monitoring S6, by the control unit 32, a parameter indicative of a health of feed of electric power to the rotor assembly 6, controlling S7, by the control unit 32, the electrical transfer arrangement 14 to connect at least two of the rotor windings 12, 12' in the set of rotor windings 12, 12' such that for the rotor assembly 6 the asynchronous fallback mode of operation is achieved in response to the monitored parameter fulfilling a predetermined criterion.

**Example 31:** The method of example 30, when dependent on example 11, wherein the arrangement 4 comprises the rotary electrical interface 20, and wherein controlling S7, by the control unit 32, the electrical transfer arrangement 14 to connect at least two of the rotor windings 12, 12' in the set of rotor windings 12, 12' comprises controlling, by the control unit 32, the rotary electrical interface 20 to generate the modulation signal carried by the electric power, and wherein the electrical transfer arrangement 14 is configured to connect at least two of the rotor windings 12, 12' in the set of rotor windings 12, 12' in response to the the modulation signal carried by the electric power.

**Example 32:** The method of any of examples 25-31, when dependent on example 22, wherein the arrangement 4 comprises the at least one stator winding 28, 28' and the stator electrical transfer arrangement 30, the method comprising: selecting S12, by the control unit 32, a desired electric power for the at least one stator winding 28, 28' based on the desired operating parameter for the rotor shaft 10, controlling S13, by the control unit 32, feed of electric power to the at least one stator winding 28, 28' based on the desired electric power for the at least one stator winding 28, 28'.

**Example 33:** The method of example 32, wherein selecting S12, by the control unit 32, the desired feed electric power for the at least one stator winding 28, 28' is further based on the desired electric power for at least one of the rotor windings 12, 12' in the set of rotor windings 12, 12'.

**Example 34:** The method of any of examples 25-33, when dependent on example 23, wherein the arrangement 4 comprises the plurality of stator windings 28, 28' and the stator electrical transfer arrangement 30, the method further comprising: selecting S22, by the control unit 32, a desired electric power for each stator winding 28, 28' of the plurality of stator windings 28, 28' based on the desired operating parameter, controlling S23, by the control unit 32, feed of electric power to each stator winding 28, 28' of the plurality of stator windings 28, 28' based on the desired electric power for each stator winding 28, 28' of the plurality of stator windings 28, 28'.

**Example 35:** The method of any example 34, wherein selecting S22, by the control unit 32, the desired electric power for each stator winding 28, 28' of the plurality of stator windings 28, 28' is further based on the desired electric power for at least one of the rotor windings 12, 12' in the set of rotor windings 12, 12'.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A rotor assembly (6) adapted to form part of an arrangement (4) for converting power, the rotor assembly (6) comprising:
- a rotor shaft (10) extending along a central axis (C), and configured to be rotatable thereabout,
- a set of rotor windings (12, 12') comprising at least two rotor windings (12, 12'), each rotor winding (12, 12') in said set of rotor windings (12, 12') surrounding said central axis (C) and being rotationally fixed to said rotor shaft (10),
said rotor assembly (6) further comprising an electrical transfer arrangement (14) adapted to be electrically connected to a source of electrical power (15) and configured to selectively feed electric power to each rotor winding (12, 12') in said set of rotor windings (12, 12').

2. The rotor assembly (6) of claim 1, wherein said electrical transfer arrangement (14) is adapted to feed electric power to each rotor winding (12, 12') in said set of rotor windings (12, 12') in accordance with an electric power feeding distribution, indicative of the amount of electric power to be fed to each rotor winding (12, 12') in said set of rotor windings (12, 12'), selected from a set of different electric power feeding distributions comprising at least two electric power feeding distributions.

3. The rotor assembly (6) of claim 2, wherein said set of different electric power feeding distributions comprises at least one exclusive electric power feeding distribution for each rotor winding (12, 12') in said set of rotor windings (12, 12'), each exclusive electric power feeding distribution being indicative of feeding electric power to the associated rotor winding (12, 12') only.

4. The rotor assembly (6) of any of claims 2-3, wherein said set of different electric power feeding distributions comprises at least one shared electric power feeding distribution being indicative of simultaneously feeding electric power to at least two of said rotor windings (12, 12') in said set of rotor windings (12, 12').

5. The rotor assembly (6) of any of the preceding claims, wherein the electrical transfer arrangement (14) is adapted to continuously vary feed of electric power to each rotor winding (12, 12') in said set of rotor windings (12, 12').

6. The rotor assembly (6) of any of the preceding claims, wherein said electrical transfer arrangement (14) comprises a shared power electronic device (16) adapted to selectively feed electric power to each rotor winding (12, 12') in said set of rotor windings (12, 12'), and wherein preferably said shared power electronic device (16) is rotationally fixed to said rotor shaft (10).

7. The rotor assembly (6) of any of the preceding claims, wherein said electrical transfer arrangement (14) comprises a plurality of rotor power electronic devices (18), each of said rotor power electronic devices (18) being associated with one of said rotor windings (12, 12') in said set of rotor windings (12, 12'), and adapted to selectively control feeding of electric power to said corresponding rotor winding (12, 12'), and wherein preferably each rotor power electronic device (18) is rotationally fixed to said rotor shaft (10).

8. The rotor assembly (6) of any of the preceding claims, wherein said rotor shaft (10) is adapted to rotate relative to said source of electrical power (15), and wherein said electrical transfer arrangement (14) comprises a rotary electrical interface (20) adapted to transfer electrical power from said source of electrical power (15) to said set of rotor windings (12, 12').

9. The rotor assembly (6) of any of the preceding claims, wherein said electrical transfer arrangement (14) is adapted to selectively feed electric power to each rotor winding (12, 12') in said set of rotor windings (12, 12') in response to a modulation signal carried by said electric power.

10. The rotor assembly (6) of claim 9, when dependent on claim 8, wherein the rotor assembly (6) comprises the rotary electrical interface (20), wherein said rotary electrical interface (20) is adapted to generate said modulation signal carried by said electric power, and wherein said modulation signal is preferably generated by controlling a switching frequency at said rotary electrical interface (20).

11. The rotor assembly (6) of any one of the preceding claims, wherein said electrical transfer arrangement (14) is adapted to electrically connect together at least two of said rotor windings (12, 12') in said set of rotor windings (12, 12') such that said rotor assembly (6) is configured for an asynchronous fallback mode of operation, preferably said electrical transfer arrangement (14) comprises at least one switch (26) adapted to electrically connect together said at least two rotor windings (12, 12') in said set of rotor windings (12, 12') such that said rotor assembly (6) is configured for said asynchronous fallback mode of operation.

12. An arrangement (4) for converting power, comprising the rotor arrangement (6) according to any of the preceding claims and a stator assembly (8), said stator assembly (8) comprising at least one stator (28, 28') coaxially arranged with said rotor shaft (10) and at least partially overlapping with at least one of said rotor windings (12, 12') along said central axis (C), and wherein said arrangement (4) is adapted to convert power between the source of electrical power (15) and a rotation of said rotor shaft (10) relative to said at least one stator (28, 28').

13. The arrangement (4) of claim 12, wherein said at least one stator (28, 28') comprises a stator winding (28, 28'), and wherein said stator assembly (8) comprises a stator electrical transfer arrangement (30) adapted to be electrically connected to a source of electrical power (15') and adapted to selectively feed electric power to said stator winding (28, 28').

14. A vehicle (2) comprising the rotor assembly (6) according to any one of claims 1-11 or the arrangement (4) according to any of claims 12-13.

15. A method for controlling the arrangement (4) of any of claims 12-13, the arrangement (4) further comprising a control unit (32), the method comprising:
- receiving (S1) a desired operating parameter for said rotor shaft (10) at said control unit (32),
- determining (S2), by said control unit (32), a desired electric power for each rotor winding in said set of rotor windings based on said desired operating parameter,
- controlling (S3), by said control unit (32), said electrical transfer arrangement (14) to selectively feed electric power to each rotor winding (12, 12') in said set of rotor windings (12, 12') based on said desired electric power.
